# EUROPÄISCHE PATENTSCHRIFT

(11) **EP 2 079 002 B1**
(45) Veröffentlichungstag und Bekanntmachung des Hinweises auf die Patenterteilung: **07.03.2018**
(21) Anmeldenummer: 08168641.2
(22) Anmeldetag: 07.11.2008
(51) Int. Cl.: G06F 1/26, G06F 1/18

(54) **Mainboard zum Einsatz in Systemen mit unterschiedlichen Spannungsversorgungskonzepten**
Mainboard for use in systems with different voltage supply concepts
Carte mère destinée à être utilisée dans des systèmes ayant des concepts d'alimentation en tension différents

(30) Priorität: 11.01.2008 DE 102008003986
(43) Veröffentlichungstag der Anmeldung: 15.07.2009
(73) Patentinhaber: Fujitsu Technology Solutions Intellectual Property GmbH, 80807 München (DE)
(72) Erfinder: Kastl, Peter, 86529, Schrobenhausen (DE); Häussermann, Rudolf, 86150, Augsburg (DE)
(74) Vertreter: Epping - Hermann - Fischer

(56) Entgegenhaltungen:
- US-A1- 2003 032 311
- US-A1- 2003 122 532

## Beschreibung

Die Erfindung betrifft ein Mainboard zur Steuerung und Versorgung elektronischer Komponenten, wobei das Mainboard einen ersten Stecker zur Aufnahme eines Gegensteckers einer Spannungsversorgungseinheit aufweist und der erste Stecker Anschlusskontakte mehrerer Versorgungsleitungen auf dem Mainboard umfasst.

Elektronische Geräte besitzen ein Mainboard zur Steuerung und Versorgung aller Komponenten des Gerätes, wobei das Mainboard das Herzstück des Gerätes bildet, in dem alle Signale und Informationen zusammenlaufen und verarbeitet werden.

Zum Betrieb eines Gerätes müssen alle Komponenten sowie das Mainboard selbst von einer Spannungsversorgungseinheit mit elektrischer Energie aus dem Stromnetz versorgt werden. Dabei werden je nach Ausführung und Anforderungen an das Gerät unterschiedliche Spannungsversorgungskonzepte verfolgt.

Aus dem Stand der Technik ist die Druckschrift US 2003/0122532 A1 bekannt. Hierin wird eine Leistungsversorgungseinrichtung beschrieben, die eine primäre Leistungsschaltung aufweist, die mit einer CPU verbunden ist, um diese zu versorgen. Die Leistungsversorgungseinrichtung weist des Weiteren eine Kontrollschaltung auf, die an die CPU angeschlossen ist und eine Hilfsleistungsschaltung, die an die Kontrollschaltung angeschlossen ist, um die CPU über die Kontrollschaltung mit Leistung zu versorgen. Eine Überwachungsschaltung überwacht die Spannungsversorgung an der CPU und kann die Kontrolleschaltung aktivieren, um die Hilfsleistungsschaltung mit der CPU zu koppeln, um diese mit Leistung zu versorgen, wenn die primäre Versorgungsleistung nicht ausreichend ist, die CPU mit Leistung zu versorgen oder wenn die elektrische Versorgungsleistung der CPU getrennt ist oder wenn die Versorgungsleistung geringer als der benötigte Wert ist.

Weiter ist aus dem Stand der Technik die Druckschrift US 2003/0032311 A1 bekannt. Hierin wird eine Hauptplatine mit mehrfacher Leistungsselektion beschrieben. Die Komponenten auf der Hauptplatine umfassen verschiedene Steckverbinder. Die Steckverbinder weisen unterschiedliche Anschlusszahlen auf und werden an Geräte und einen CPU-Sockel angeschlossen.

Zum Betrieb von kleineren und Platz sparenden Produktlösungen, beispielsweise Notebooks oder Set-Top-Boxen, sind oft externe Netzteile vorgesehen, die den Geräten über einen an der Geräteaußenseite zugänglichen Hohlstecker eine Versorgungsspannung bereitstellen, wobei der Hohlstecker meist eine klemmende Verbindung ohne zusätzliche Fixierung darstellt.

In Geräten mit größeren Gehäusen, beispielsweise in Computern oder Servern, werden jedoch meist interne Spannungsversorgungseinheiten verbaut, die über eine im Gehäuse liegende robuste und oftmals verriegelbare Steckverbindung mit dem Mainboard verbunden sind und mehrere Versorgungsspannungen gemäß dem ATX-Standard zur Verfügung stellen.
Eine dritte Möglichkeit der Spannungsversorgung ist z. B. in Schaltschränken von Maschinen gegeben, bei der ebenfalls eine interne Spannungsversorgungseinheit über einen internen Stecker mit dem Mainboard verbunden ist, jedoch lediglich eine Versorgungsspannung bereitstellt.
Aus den unterschiedlichen Konzepten entsteht der erhebliche Nachteil, dass für getrennte Produktlösungen Mainboards mit jeweils unterschiedlichen Versorgungsanschlüssen und - konfigurationen entwickelt werden müssen oder das Spannungsversorgungskonzept einer Produktlösung auf ein bereits vorliegendes Mainboard umgestellt werden muss. Dies ist mit erhöhten Entwicklungskosten verbunden.
Der Erfindung liegt daher die Aufgabe zugrunde, ein verbessertes Mainboard zu beschreiben.
Die Aufgabe wird erfindungsgemäß mittels eines Mainboards der eingangs genannten Art dadurch gelöst, dass das Mainboard eine Logikschaltung aufweist gemäß dem Anspruch 1. Die erfindungsgemäße Lösung hat den Vorteil, dass das Mainboard mit Versorgungsspannungen und Anschlusskonfigurationen unterschiedlicher Konzepte arbeiten kann. So ist es möglich, das Mainboard in getrennten Produktlösungen unterschiedlicher Anschlusskonfiguration einzusetzen, ohne jeweils ein Mainboard für eine Produktlösung entwickeln zu müssen.

Vorzugsweise ist der erste Stecker derart eingerichtet, dass eine erste angeschlossene Spannungsversorgungseinheit eine Versorgungsspannung auf einer Versorgungsleitung und eine zweite angeschlossene Spannungsversorgungseinheit mehrere Versorgungsspannungen auf weiteren Versorgungsleitungen am ersten Stecker des Mainboards bereitstellen kann. Ist beispielsweise ein interner AC/DC-Adapter an das Mainboard angeschlossen, der eine einzige Versorgungsspannung bereitstellt, so wird diese Versorgungsspannung, beispielsweise 24 Volt, über eine Versorgungsleitung der Logikschaltung zugeführt. Ist jedoch ein Netzteil angeschlossen, das mehrere Versorgungsspannungen, beispielsweise 3,3 Volt, 5 Volt und 12 Volt, liefert, so werden diese Versorgungsspannungen über weitere Versorgungsleitungen der Logikschaltung zugeführt. Das bedeutet, dass in Höhe und Anzahl unterschiedliche Versorgungsspannungen verschiedener Spannungsversorgungseinheiten über den ersten Stecker am Mainboard der Logikschaltung zugeführt werden können.

Bevorzugt weist das Mainboard zusätzlich einen zweiten Stecker zur Aufnahme eines Gegensteckers einer Spannungsversorgungseinheit auf, wobei der zweite Stecker einen Anschlusskontakt einer weiteren Versorgungsleitung auf dem Mainboard umfasst. Das heißt, dass das Mainboard neben dem ersten Stecker eine zweite Möglichkeit der Zuführung einer Versorgungsspannung aufweist.

Vorzugsweise kann die Logikschaltung eine am zweiten Stecker angeschlossene dritte Spannungsversorgungseinheit identifizieren, wobei die dritte Spannungsversorgungseinheit eine weitere Versorgungsspannung bereitstellt. Dadurch ist es der Logikschaltung möglich, zwischen unterschiedlichen Versorgungsspannungssignalen am ersten oder zweiten Stecker des Mainboards zu unterscheiden.

Vorzugsweise erfolgt abhängig von einer am ersten Stecker angeschlossenen ersten oder zweiten Spannungsversorgungseinheit oder am zweiten Stecker angeschlossenen dritten Spannungsversorgungseinheit eine Weiterleitung und Verarbeitung der jeweils bereitgestellten Versorgungsspannung(en) durch die Logikschaltung. Je nach Konfiguration einer an einem der beiden Stecker angeschlossenen Spannungsversorgungseinheit kann die Logikschaltung diese erkennen und zur Versorgung von elektronischen Komponenten auf dem Mainboard entsprechend weiterverarbeiten.

Vorzugsweise weist die Logikschaltung mehrere Multiplexer-Bausteine auf, welche jeweils ein oder mehrere Versorgungsspannungssignale in Abhängigkeit einer Steuergröße weiter leiten. Durch diese Multiplexer-Bausteine ist eine gezielte Weiterleitung von Versorgungsspannungssignalen je nach Konfiguration der Spannungsversorgungseinheit und Belegung des ersten oder zweiten Steckers auf dem Mainboard sowie eine gezielte Isolation unbenutzter Versorgungsleitungen möglich. Dadurch wird vermieden, dass in einer bestimmten Konfiguration nicht benötigte Schaltungsteile der Logikschaltung Schaden durch die eingespeiste(n) Spannung(en) nehmen.

Bevorzugt weist die Logikschaltung einen Spannungsregler-Baustein auf. Das heißt, dass eine einzelne am ersten oder zweiten Stecker des Mainboards anliegende Versorgungsspannung in mehrere On-board-Versorgungsspannungen aufgeteilt wird, falls die Höhe der Versorgungsspannung vorbestimmten Kriterien genügt. Außerdem gewährleistet der Spannungsregler-Baustein eine Glättung der bereitgestellten Versorgungsspannung sowie eine Bereinigung von Störspannungen, die beispielsweise durch Netzbrummen entstehen können.

Vorzugsweise weist die Logikschaltung einen Prüfbaustein auf, der im Falle einer am ersten Stecker angeschlossenen zweiten Spannungsversorgungseinheit und in Abhängigkeit eines Reset-Signals eine Leistungsprüfung der bereitgestellten Versorgungsspannungen durchführt. Das heißt, dass jeweils eine mit einem Versorgungsspannungssignal belegte Versorgungsleitung auf dem Mainboard mit einer einseitig auf Masse gelegten Last, beispielsweise einem ohmschen Widerstand, belastet wird und eine Leistungsmessung der daran anliegenden Spannungssignale vorgenommen wird. Dadurch ist gewährleistet, dass On-board-Versorgungsspannungssignale lediglich an elektronische Komponenten auf dem Mainboard weitergegeben werden, falls die Leistung einer angeschlossenen zweiten Spannungsversorgungseinheit vorbestimmten Kriterien genügt.

Bevorzugt ist der erste Stecker derart ausgebildet, dass er einen ersten Gegenstecker einer ersten Spannungsversorgungseinheit und/oder einen zweiten Gegenstecker einer zweiten Spannungsversorgungseinheit aufnehmen kann. Das bedeutet, dass die Gegenstecker einer ersten und zweiten Spannungsversorgungseinheit identisch ausgebildet sein können, z. B. als ATX-Gegenstecker, und jeweils bei Anschluss einer ersten oder zweiten Spannungsversorgungseinheit mit dem ersten Stecker am Mainboard verrasten. Eine weitere Möglichkeit ist, dass beispielsweise der erste Gegenstecker als Hauptgegenstecker und der zweite Gegenstecker als Zusatzgegenstecker ausgebildet ist, wobei die beiden Gegenstecker an unterschiedlichen Positionen auf dem ersten Stecker am Mainboard verrasten.

Vorzugsweise ist der erste Stecker als ATX-Stecker ausgebildet. Das bedeutet, dass der erste Stecker zur Kontaktierung eines internen Netzteils ausgelegt ist.

Bevorzugt ist der zweite Stecker als Hohlstecker ausgebildet. Das heißt, dass der zweite Stecker zur Kontaktierung eines externen Netzteiles ausgelegt ist.

Weitere Merkmale sind in der Figurenbeschreibung sowie in den Unteransprüchen offenbart.

Die Erfindung wird anhand mehrerer Zeichnungen näher erläutert.

Es zeigen:
- Figur 1: ein schematisiertes Blockschaltbild einer Anordnung mit einem Mainboard und mehreren Spannungsversorgungseinheiten gemäß einer ersten Konfiguration,
- Figur 2: ein schematisiertes Blockschaltbild der Anordnung gemäß einer weiteren Konfiguration und
- Figur 3: ein schematisiertes Blockschaltbild der Anordnung gemäß einer dritten Konfiguration.

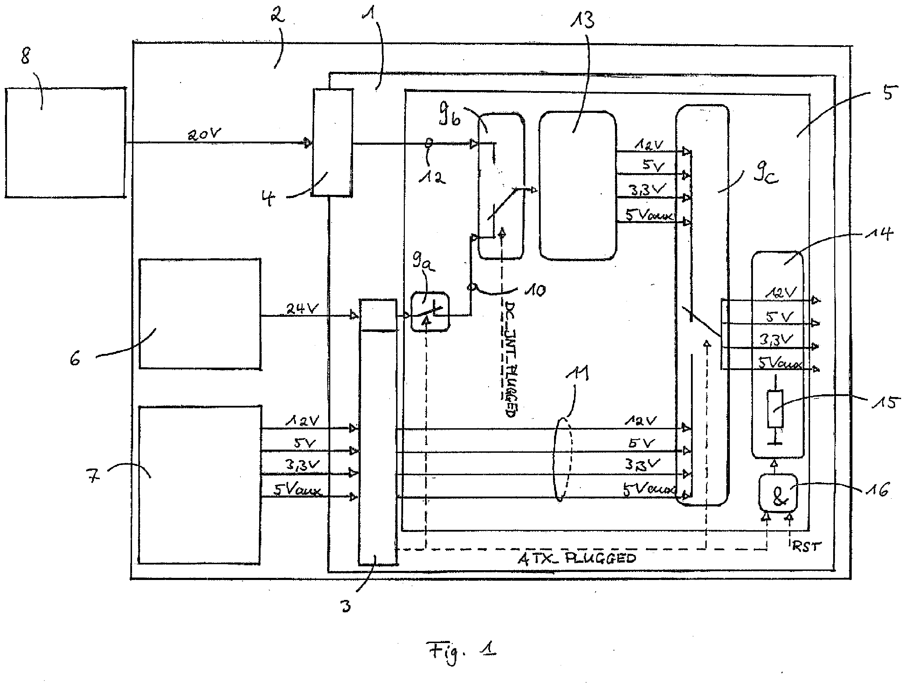

Figur 1 zeigt ein schematisiertes Blockschaltbild einer Anordnung mit einem Mainboard 1 und einer ersten, zweiten und dritten Spannungsversorgungseinheit 6, 7, 8, wobei jeweils nur eine angeschlossene Spannungsversorgungseinheit 6 oder 7 oder 8 eine Versorgungsspannung bereitstellt. Zusätzlich umfasst ein Gehäuse 2 eines elektronischen Gerätes das Mainboard 1 und die erste und zweite Spannungsversorgungseinheit 6, 7, welche als interne Spannungsversorgungseinheiten innerhalb des Gehäuses 2 angeordnet sind. Die dritte Spannungsversorgungseinheit 8 ist als externe Spannungsversorgungseinheit außerhalb des Gehäuses 2 angeordnet. Die erste Spannungsversorgungseinheit 6 kann eine Versorgungsspannung, hier 24 Volt, bereitstellen und ist an einen unbelegten Pin eines ersten Steckers 3 auf dem Mainboard 1 anschließbar. Ferner kann eine zweite Spannungsversorgungseinheit 7 an die übrigen Pins des ersten Steckers 3 angeschlossen werden, wobei die zweite Spannungsversorgungseinheit 7 mehrere Versorgungsspannungen, beispielsweise 12 Volt, 5 Volt, 3,3 Volt und 5 Volt Hilfsspannung, bereitstellt. Der erste Stecker 3 kann beispielsweise als ATX-Stecker ausgebildet sein, wobei die erste und zweite Spannungsversorgungseinheit 6, 7 jeweils einen entsprechenden Gegenstecker zum Verrasten auf dem ersten Stecker 3 aufweisen. Weiterhin kann die dritte Spannungsversorgungseinheit 8 an einen zweiten Stecker 4 angeschlossen werden, wobei die zweite Spannungsversorgungseinheit 8 eine weitere Versorgungsspannung von beispielsweise 20 Volt bereitstellt. Der zweite Stecker 4 kann z. B. als Hohlstecker ausgeführt sein, der eine an der Außenseite des Gehäuses 2 zugängliche Kontaktierung mit einem Gegenstecker der dritten Spannungsversorgungseinheit 8 ermöglicht. Weiterhin zeigt Figur 1 eine Logikschaltung 5, die dem ersten und zweiten Stecker 3, 4 im Signalfluss nachgeschaltet ist. Die Logikschaltung 5 weist mehrere Multiplexer-Bausteine 9a, 9b, 9c, einen Spannungsregler-Baustein 13, einen Prüfbaustein 14 sowie ein logisches UND-Glied 16 auf. Einzelne Versorgungsspannungen am ersten und zweiten Stecker 3, 4 werden über Versorgungsleitungen 10, 12 an den Multiplexer-Baustein 9b weiter geleitet. Mehrere Versorgungsspannungen am ersten Stecker 3 werden über weitere Versorgungsleitungen 11 direkt an den Multiplexer-Baustein 9c weitergeleitet. Die drei Multiplexer-Bausteine 9a, 9b, 9c sowie das UND-Glied 16 werden über die beiden Steuergrößen ATX_PLUGGED und DC_INT_PLUGGED gesteuert. Ferner ist der Ausgang des UND-Gliedes 16 abhängig von einem Reset-Signal RST, das an einem Eingang des UND-Gliedes 16 anliegt.

Liefert nun eine erste Spannungsversorgungseinheit 6 eine einzelne Versorgungsspannung an den ersten Stecker 3 am Mainboard 1, so registriert dies die Logikschaltung 5 und setzt die Steuergröße DC_INT_PLUGGED auf logisch wahr. Dadurch schaltet der Multiplexer-Baustein 9b die Versorgungsleitung 10 auf seinen Ausgang. Der Kontakt zur weiteren Versorgungsleitung 12 ist damit offen, sodass der zweite Stecker 4 isoliert ist und damit keine Versorgungsspannungssignale von dem zweiten Stecker 4 erhalten werden können. Ferner wird die zweite Steuergröße ATX_PLUGGED auf logisch falsch gesetzt, so dass der Multiplexer-Baustein 9a geschlossen bleibt und damit eine leitende Verbindung zwischen der ersten Spannungsversorgungseinheit 6 und dem Multiplexer-Baustein 9b aufrechterhalten bleibt. Aufgrund der logisch falschen Steuergröße ATX_PLUGGED schaltet der Multiplexer-Baustein 9c auf den Ausgang des Spannungsregler-Bausteins 13 und isoliert somit die weiteren Versorgungsleitungen 11, sodass keine Versorgungsspannungen von einer zweiten Spannungsversorgungseinheit 7 eingeleitet werden können. Der Spannungsregler-Baustein 13 empfängt also die Versorgungsspannung der ersten Spannungsversorgungseinheit 6 und erzeugt daraus an seinem Ausgang die On-Board-Spannungen 12 Volt, 5 Volt, 3,3 Volt, 5 Volt Hilfsspannung, die über den Multiplexer-Baustein 9c an den Prüfbaustein 14 weitergegeben und entsprechenden an das Mainboard 1 angeschlossenen elektronischen Komponenten zur Verfügung gestellt werden können. Dabei erzeugt der Spannungsregler-Baustein 13 lediglich On-board-Spannungen an seinem Ausgang, falls die Leistung der ersten Spannungsversorgungseinheit 6 vorbestimmten Kriterien genügt.

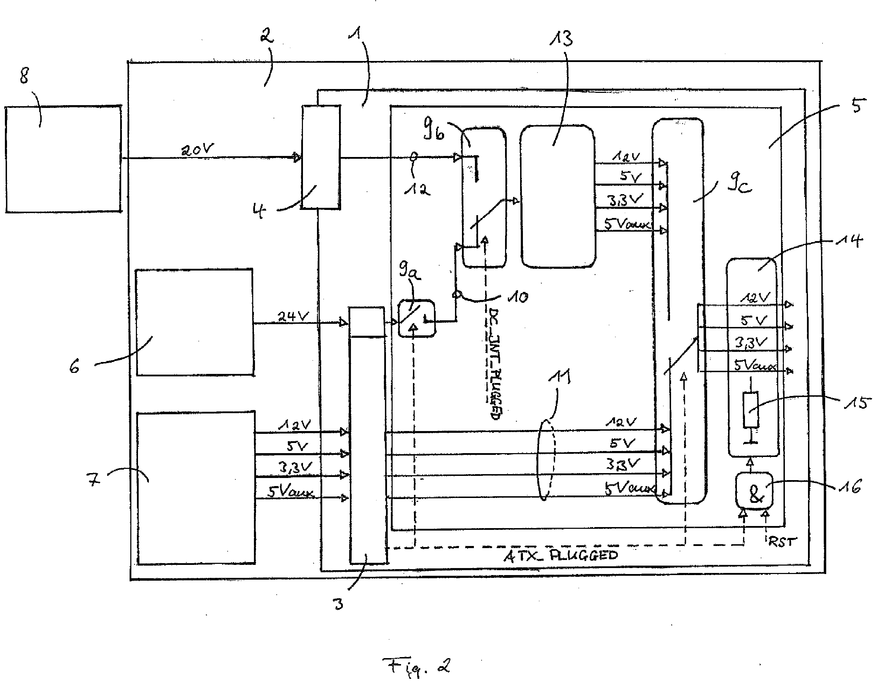

Figur 2 zeigt ein schematisiertes Blockschaltbild einer Anordnung gemäß Figur 1. Hierbei liefert jedoch die zweite Spannungsversorgungseinheit 7 mehrere Versorgungsspannungen über den ersten Stecker 3 an das Mainboard 1. Die Steuergröße DC_INT_PLUGGED ist auch hier logisch wahr, so dass die Versorgungsleitung 10 gemäß Figur 1 auf den Ausgang des Multiplexer-Bausteins 9b geschaltet ist. Ferner ist jetzt jedoch die zweite Steuergröße ATX_PLUGGED auf logisch wahr gesetzt, da mehrere Versorgungsspannungen 12 Volt, 5 Volt, 3,3 Volt, 5 Volt Hilfsspannung bereitgestellt werden. Das heißt, dass der Multiplexer-Baustein 9a nun geöffnet ist, so dass kein Versorgungsspannungssignal über die Versorgungsleitung 10 an den Spannungsregler-Baustein 13 übertragen werden kann. Der Spannungsregler-Baustein 13 ist somit vollständig isoliert von den Versorgungsspannungen der zweiten Spannungsversorgungseinheit 7. Die Steuergröße ATX_PLUGGED schaltet den Multiplexer-Baustein 9c auf die weiteren Versorgungsleitungen 11 und stellt somit dem Prüfbaustein 14 die an den weiteren Versorgungsleitungen 11 anliegenden Spannungspegel zur Verfügung. Ferner bildet das UND-Glied 16 mit der logisch wahren Steuergröße ATX_PLUGGED und einem logisch wahren Reset-Signal RST ein logisch wahres Signal an seinem Ausgang und veranlasst somit den Prüfbaustein 14, die einzelnen Spannungspegel der weiteren Versorgungsleitungen 11 über eine einseitig auf Masse gelegte Kreuzlast 15 zu überprüfen. Dadurch ist gewährleistet, dass eine zweite Spannungsversorgungseinheit 7 die zum Betrieb des Mainboards 1 und daran angeschlossener elektronischer Komponenten erforderliche Mindestleistung erbringen kann.

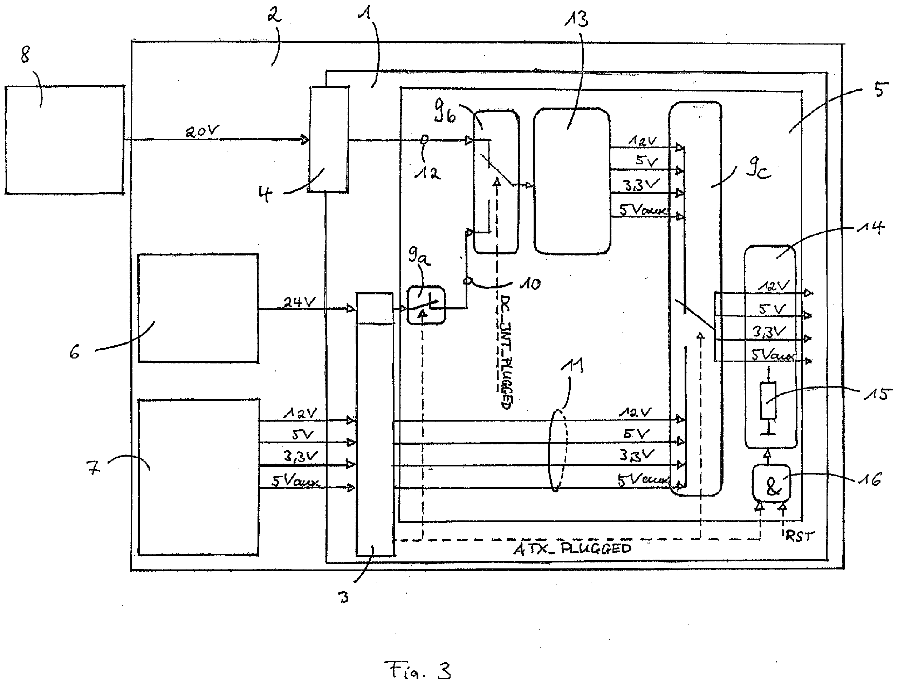

Figur 3 zeigt ein schematisiertes Blockschaltbild der Anordnung gemäß Figur 1 und Figur 2. Nun stellt eine dritte Spannungsversorgungseinheit 8 dem Mainboard 1 über den zweiten Stecker 4 eine externe Versorgungsspannung, hier 20 Volt, bereit. Die Steuergröße DC_INT_PLUGGED ist jetzt im Gegensatz zu Figur 1 und Figur 2 auf logisch falsch gesetzt, sodass die weitere Versorgungsleitung 12 auf den Ausgang des Multiplexer-Bausteins 9b gelegt ist. Die Versorgungsleitung 10 ist damit isoliert und kann kein Versorgungsspannungssignal vom ersten Stecker 3 an den Spannungsregler-Baustein 13 weiterleiten. Die Steuergröße ATX_PLUGGED ist logisch falsch gesetzt, so dass der Ausgang des Spannungsregler-Bausteins 13 über den Multiplexer-Baustein 9c an den Prüfbaustein 14 weitergeleitet wird. Ferner ist der Multiplexer-Baustein 9a geschlossen, was jedoch bei dieser Konfiguration ohne Bedeutung bleibt. Falls die dritte Spannungsversorgungseinheit 8 vorbestimmten Kriterien genügt, erzeugt der Spannungsregler-Baustein 13 an seinem Ausgang die On-board-Versorgungsspannungssignale 12 Volt, 5 Volt, 3,3 Volt, 5 Volt Hilfsspannung und stellt diese angeschlossenen elektronischen Komponenten zur Verfügung.

Die vorliegende Erfindung ist nicht auf die dargestellten Ausführungsformen beschränkt. So kann der erste Stecker 3 beispielsweise als ATX-Stecker ausgeführt sein, wobei die erste und zweite Spannungsversorgungseinheit 6, 7 jeweils über einen entsprechenden ATX-Gegenstecker mit dem ersten Stecker 3 kontaktiert werden. Ferner könnte eine zweite Spannungsversorgungseinheit 7 auch eine Versorgungsspannung über den einzelnen Pin am ersten Stecker 3 bereitstellen, der für eine erste Spannungsversorgungseinheit 6 reserviert ist. In diesem Fall verhindert die auf logisch wahr gesetzte Steuergröße ATX_PLUGGED durch Öffnen des Multiplexer-Bausteins 9a jedoch, dass die zusätzlich bereitgestellte Versorgungsspannung den Spannungsregler-Baustein 13 über die Versorgungsleitung 10 belastet.
Alle dargestellten Versorgungsspannungswerte sind beispielhaft gewählt und bilden keine Einschränkung der Erfindung.

### Bezugszeichenliste

- 1: Mainboard
- 2: Gehäuse
- 3: erster Stecker
- 4: zweiter Stecker
- 5: Logikschaltung
- 6: erste Spannungsversorgungseinheit
- 7: zweite Spannungsversorgungseinheit
- 8: dritte Spannungsversorgungseinheit
- 9a, 9b, 9c: Multiplexer-Baustein
- 10: Versorgungsleitung
- 11: weitere Versorgungsleitungen
- 12: weitere Versorgungsleitung
- 13: Spannungsregler-Baustein
- 15: Kreuzlast
- 16: UND-Glied
- ATX_PLUGGED: Steuergröße
- DC_INT_PLUGGED: Steuergröße
- RST: Reset-Signal

## Patentansprüche

1. Mainboard (1) zur Steuerung und Versorgung elektronischer Komponenten, wobei das Mainboard einen ersten Stecker (3) zur Aufnahme eines Gegensteckers einer Spannungsversorgungseinheit (6, 7) aufweist und der erste Stecker (3) Anschlusskontakte mehrerer Versorgungsleitungen (10, 11) auf dem Mainboard (1) umfasst, und das Mainboard (1) eine Logikschaltung (5) aufweist, die dazu eingerichtet ist, dass eine Identifikation einer ersten oder zweiten am Mainboard (1) angeschlossenen Spannungsversorgungseinheit (6, 7) möglich ist und eine davon abhängige Weiterleitung und Verarbeitung der jeweils bereitgestellten Versorgungsspannung(en) durch die Logikschaltung (5) erfolgt, wobei der erste Stecker (3) derart eingerichtet ist, dass eine erste angeschlossene Spannungsversorgungseinheit (6) eine einzelne Versorgungsspannung auf einer Versorgungsleitung (10) und eine zweite angeschlossene Spannungsversorgungseinheit (7) mehrere Versorgungsspannungen auf weiteren Versorgungsleitungen (11) am ersten Stecker (3) des Mainboards (1) bereitstellen können,
wobei die Logikschaltung (5) dazu eingerichtet ist aus der einzelnen Versorgungsspannung der ersten Spannungsversorgungseinheit (6) an der Versorgungsleitung (10) des Steckers (3) über einen Spannungsregler-Baustein (13) mehrere On-Board-Spannungen zu erzeugen oder die mehreren Versorgungsspannungen der zweiten Spannungsversorgungseinheit (7) an den weiteren Versorgungsleitungen (11) des Steckers (3) als On-Board-Spannungen weiterzuleiten.

2. Mainboard (1) nach Anspruch 1,
**dadurch gekennzeichnet, dass** das Mainbord (1) zusätzlich einen zweiten Stecker (4) zur Aufnahme eines Gegensteckers einer dritten Spannungsversorgungseinheit (8) aufweist, und der zweite Stecker (4) einen Anschlusskontakt einer weiteren Versorgungsleitung (12) auf dem Mainboard (1) umfasst.

3. Mainboard (1) nach Anspruch 2,
**dadurch gekennzeichnet, dass** die Logikschaltung (5) eine am zweiten Stecker (4) angeschlossene dritte Spannungsversorgungseinheit (8) identifizieren kann, wobei die dritte Spannungsversorgungseinheit (8) eine weitere Versorgungsspannung bereitstellt.

4. Mainboard (1) nach Anspruch 3,
**dadurch gekennzeichnet, dass** abhängig von einer am ersten Stecker (3) angeschlossenen ersten oder zweiten Spannungsversorgungseinheit (6, 7) oder am zweiten Stecker (4) angeschlossenen dritten Spannungsversorgungseinheit (8) eine Weiterleitung und Verarbeitung der jeweils bereitgestellten Versorgungsspannung(en) durch die Logikschaltung (5) erfolgt.

5. Mainboard (1) nach einem der Ansprüche 1 bis 4,
**dadurch gekennzeichnet, dass** die Logikschaltung (5) mehrere Multiplexer-Bausteine (9a, 9b, 9c) aufweist, welche jeweils eine oder mehrere Versorgungsspannungen in Abhängigkeit einer Steuergröße (ATX_PLUGGED, DC_INT_PLUGGED) weiterleiten.

6. Mainboard (1) nach einem der Ansprüche 1 bis 5,
**dadurch gekennzeichnet, dass** die Logikschaltung (5) einen Prüfbaustein (14) aufweist, der im Falle einer angeschlossenen zweiten Spannungsversorgungseinheit (7) und in Abhängigkeit eines Reset-Signals (RST) eine Leistungsprüfung der bereitgestellten Versorgungsspannungen durchführt.

7. Mainboard (1) nach Anspruch 6,
**dadurch gekennzeichnet, dass** der Prüfbaustein (14) wenigstens eine Kreuzlast (15) aufweist.

8. Mainboard (1) nach einem der Ansprüche 1 bis 7,
**dadurch gekennzeichnet, dass** der erste Stecker (3) derart ausgebildet ist, dass er einen ersten Gegenstecker einer ersten Spannungsversorgungseinheit (6) und/oder einen zweiten Gegenstecker einer zweiten Spannungsversorgungseinheit (7) aufnehmen kann.

9. Mainboard (1) nach einem der Ansprüche 1 bis 8,
**dadurch gekennzeichnet, dass** der erste Stecker (3) als ATX-Stecker ausgebildet ist.

10. Mainboard (1) nach einem der Ansprüche 1 bis 9,
**dadurch gekennzeichnet, dass** der zweite Stecker (4) als Hohlstecker ausgebildet ist.

11. Elektronisches Gerät mit einem Gehäuse (2) zur Aufnahme mehrerer Komponenten des Gerätes und einem Mainboard (1), das nach einem der Ansprüche 1 bis 10 ausgeführt ist.

12. Elektronisches Gerät nach Anspruch 11,
**dadurch gekennzeichnet, dass** das Gerät eine interne Spannungsversorgungseinheit (6) aufweist, die dem Mainboard (1) über einen ersten Stecker (3) am Mainboard (1) eine vorbestimmte Versorgungsspannung bereitstellt.

13. Elektronisches Gerät nach Anspruch 11,
**dadurch gekennzeichnet, dass** das Gerät eine interne Spannungsversorgungseinheit (7) aufweist, die dem Mainboard (1) über einen ersten Stecker (3) am Mainboard (1) mehrere vorbestimmte Versorgungsspannungen bereitstellt.

14. Elektronisches Gerät nach Anspruch 13,
**dadurch gekennzeichnet, dass** die interne Spannungsversorgungseinheit (7) ein ATX-Netzteil ist.

15. Anordnung mit einem elektronischen Gerät nach einem der Ansprüche 11 bis 14 und einer externen Spannungsversorgungseinheit (8), die dem Mainboard (1) über einen zweiten Stecker (4) am Mainboard (1) eine Versorgungsspannung bereitstellt.

## Claims

1. Mainboard (1) for the control and supply of electronic components, wherein the mainboard comprises a first plug (3) for receiving a mating plug of a voltage supply unit (6, 7) and the first plug (3) includes connection contacts of multiple supply lines (10, 11) on the mainboard (1), and the mainboard (1) comprises a logics circuit (5), which is configured so that an identification of a first or a second voltage supply unit (6, 7) connected to the mainboard (1) is possible and a forwarding and processing of the respective provided supply voltage(s) depending thereon is effected by the logics circuit (5), wherein the first plug (3) is configured in such a way that a first connected voltage supply unit (6) can provide an individual supply voltage on a supply line (10) and a second connected voltage supply unit (7) can provide multiple supply voltages on further supply lines (11) on the first plug (3) of the mainboard (1),
wherein the logics circuit (5) is configured to generate multiple on-board voltages from the individual supply voltage of the first voltage supply unit (6) on the supply line (10) of the plug (3) via a voltage control module (13) or to forward the multiple supply voltages of the second voltage supply unit (7) on the further supply lines (11) of the plug (3) as on-board voltages.

2. Mainboard (1) according to claim 1,
**characterized in that** the mainboard (1) additionally comprises a second plug (4) for receiving a mating plug of a third voltage supply unit (8), and the second plug (4) includes a connection contact of a further supply line (12) on the mainboard (1).

3. Mainboard (1) according to claim 2,
**characterized in that** the logics circuit (5) can identify a third voltage supply unit (8) connected to the second plug (4), wherein the third voltage supply unit (8) provides a further supply voltage.

4. Mainboard (1) according to claim 3,
**characterized in that** depending on a first or second voltage supply unit (6, 7) connected to the first plug (3) or a third voltage supply unit (8) connected to the second plug (4), a forwarding and processing of the respective provided supply voltage(s) is effected by the logics circuit (5).

5. Mainboard (1) according to one of claims 1 to 4,
**characterized in that** the logics circuit (5) comprises multiple multiplexer modules (9a, 9b, 9c), which in each case forward one or multiple supply voltages depending on a control variable (ATX_PLUGGED, DC_INT_PLUGGED).

6. Mainboard (1) according to one of claims 1 to 5,
**characterized in that** the logics circuit (5) comprises a test module (14), which performs a power test of the provided supply voltages in the case of a connected second voltage supply unit (7) and depending on a reset signal (RST).

7. Mainboard (1) according to claim 6,
**characterized in that** the test module (14) comprises at least one cross load (15).

8. Mainboard (1) according to one of claims 1 to 7,
**characterized in that** the first plug (3) is formed in such a way that it can receive a first mating plug of a first voltage supply unit (6) and/or a second mating plug of a second voltage supply unit (7).

9. Mainboard (1) according to one of claims 1 to 8,
**characterized in that** the first plug (3) is formed as an ATX plug.

10. Mainboard (1) according to one of claims 1 to 9,
**characterized in that** the second plug (4) is formed as a hollow plug.

11. Electronic device with a housing (2) for receiving multiple components of the device and a mainboard (1), which is configured according to one of claims 1 to 10.

12. Electronic device according to claim 11,
**characterized in that** the device comprises an internal voltage supply unit (6), which provides the mainboard (1) with a predetermined supply voltage via a first plug (3) on the mainboard (1).

13. Electronic device according to claim 11,
**characterized in that** the device comprises an internal voltage supply unit (7), which provides the mainboard (1) with multiple predetermined supply voltages via a first plug (3) on the mainboard (1).

14. Electronic device according to claim 13,
**characterized in that** the internal voltage supply unit (7) is an ATX power supply unit.

15. Assembly with an electronic device according to one of claims 11 to 14 and an external voltage supply unit (8), which provides the mainboard (1) with a supply voltage via a second plug (4) on the mainboard (1).

## Revendications

1. Carte mère (1) destinée à la commande et à l'alimentation de composants électroniques, la carte mère présentant un premier connecteur (3) destiné à recevoir un contre-connecteur d'une unité (6, 7) d'alimentation en tension, et le premier connecteur (3) comprenant des contacts de connexion de plusieurs lignes d'alimentation (10, 11) sur la carte mère (1),
et la carte mère (1) présentant un circuit logique (5) qui est configuré pour qu'une identification d'une première ou d'une deuxième unité d'alimentation en tension (6, 7) raccordée à la carte mère (1) soit possible et qu'un transfert et un traitement de la tension (des tensions) d'alimentation respectivement fournie(s), qui en dépendent, soient réalisés par le circuit logique (5), le premier connecteur (3) étant configuré de manière à ce qu'une première unité d'alimentation en tension (6) raccordée puisse fournir une seule tension d'alimentation sur une ligne d'alimentation (10) et qu'une deuxième unité d'alimentation en tension (7) raccordée puisse fournir plusieurs tensions d'alimentation sur des lignes d'alimentation (11) supplémentaires sur le connecteur (3) de la carte mère (1),
le circuit logique (5), à partir de la seule tension d'alimentation de la première unité d'alimentation en tension (6), étant configuré pour générer sur la ligne d'alimentation (10) du connecteur (3), par l'intermédiaire d'un module (13) de régulation de tension, plusieurs tensions intégrées ou pour transférer les plusieurs tensions d'alimentation de la deuxième unité (7) d'alimentation en tension aux lignes d'alimentation (11) supplémentaires du connecteur (3) en tant que tensions intégrées.

2. Carte mère (1) selon la revendication 1,
**caractérisée en ce que** la carte mère (1) présente en plus un deuxième connecteur (4) destiné à recevoir un contre-connecteur d'une troisième unité (8) d'alimentation en tension, et **en ce que** le deuxième connecteur (4) comprend un contact de connexion d'une ligne d'alimentation (12) supplémentaire sur la carte mère (1).

3. Carte mère (1) selon la revendication 2,
**caractérisée en ce que** le circuit logique (5) peut identifier une troisième unité (8) d'alimentation en tension raccordée au deuxième connecteur (4), la troisième unité (8) d'alimentation en tension fournissant une tension d'alimentation supplémentaire.

4. Carte mère (1) selon la revendication 3,
**caractérisée en ce qu'**un transfert et un traitement de la tension d'alimentation respectivement fournie/des tensions d'alimentation respectivement fournies sont réalisés par le circuit logique (5) en fonction d'une première ou d'une deuxième (6, 7) unité d'alimentation en tension raccordée au premier connecteur (3) ou d'une troisième unité (8) d'alimentation en tension raccordée au deuxième connecteur (4).

5. Carte mère (1) selon l'une quelconque des revendications 1 à 4,
**caractérisée en ce que** le circuit logique (5) présente plusieurs modules multiplexeurs (9a, 9b, 9c), lesquels transfèrent respectivement une ou plusieurs tensions d'alimentation en fonction d'une variable de commande (ATX_PLUGGED, DC_INT_PLUGGED).

6. Carte mère (1) selon l'une quelconque des revendications 1 à 5,
**caractérisée en ce que** le circuit logique (5) présente un module de contrôle (14), lequel, en cas d'une deuxième unité (7) d'alimentation en tension raccordée et en fonction d'un signal de remise à zéro (RST), réalise un contrôle de performance des tensions d'alimentation fournies.

7. Carte mère (1) selon la revendication 6,
**caractérisée en ce que** le module de contrôle (14) présente au moins une charge croisée (15).

8. Carte mère (1) selon l'une quelconque des revendications 1 à 7,
**caractérisée en ce que** le premier connecteur (3) est réalisé de manière à ce qu'il puisse recevoir un premier contre-connecteur d'une première unité d'alimentation en tension (6) et/ou un deuxième contre-connecteur d'une deuxième unité (7) d'alimentation en tension.

9. Carte mère (1) selon l'une quelconque des revendications 1 à 8, **caractérisée en ce que** le premier connecteur (3) est réalisé comme connecteur ATX.

10. Carte mère (1) selon l'une quelconque des revendications 1 à 9, **caractérisée en ce que** le deuxième connecteur (4) est réalisé comme connecteur creux.

11. Appareil électronique comprenant un boîtier (2) destiné à recevoir plusieurs composants de l'appareil et comprenant une carte mère (1) qui est réalisée selon l'une quelconque des revendications 1 à 10.

12. Appareil électronique selon la revendication 11,
**caractérisé en ce que** l'appareil présente une unité (6) interne d'alimentation en tension qui fournit à la carte mère (1) une tension d'alimentation prédéterminée par l'intermédiaire d'un premier connecteur (3) sur la carte mère (1).

13. Appareil électronique selon la revendication 11,
**caractérisé en ce que** l'appareil présente une unité (7) interne d'alimentation en tension qui fournit à la carte mère (1) plusieurs tensions d'alimentation prédéterminées par l'intermédiaire d'un premier connecteur (3) sur la carte mère (1).

14. Appareil électronique selon la revendication 13,
**caractérisé en ce que** l'unité (7) interne d'alimentation en tension est un bloc d'alimentation ATX.

15. Agencement comprenant un appareil électronique selon l'une quelconque des revendications 11 à 14 et une unité(8) externe d'alimentation en tension qui fournit à la carte mère (1) une tension d'alimentation par l'intermédiaire d'un deuxième connecteur (4) sur la carte mère (1).
